# EUROPÄISCHE PATENTSCHRIFT

(11) **EP 1 291 998 B1**
(45) Veröffentlichungstag und Bekanntmachung des Hinweises auf die Patenterteilung: **09.09.2009**
(21) Anmeldenummer: 02015033.0
(22) Anmeldetag: 05.07.2002
(51) Int. Cl.: H02J 1/08, H02H 3/20

(54) **Vorrichtung zum Erkennen eines Fehlerfalles bei Zwei- oder Mehrspannungsbordnetzen**
Device for recognizing a fault condition in two-voltages or plural-voltages supply networks
Dispositif pour détecter une condition d'erreur dans réseaux de bord à deux ou plusieures tensions

(30) Priorität: 24.08.2001 DE 10141504
(43) Veröffentlichungstag der Anmeldung: 12.03.2003
(73) Patentinhaber: AUDI AG, 85045 Ingolstadt (DE)
(72) Erfinder: Aigner, Konrad, 85290 Geisenfeld (DE)
(74) Vertreter: Thielmann, Frank

(56) Entgegenhaltungen:
- EP-A- 1 128 515
- WO-A-02/47234
- DE-A- 19 643 005

## Beschreibung

Die Erfindung betrifft eine Vorrichtung zum Erkennen eines Fehlerfalles bei Zwei- oder Mehrspannungsbordnetzen in einem Fahrzeug unter galvanischer Trennung der Spannungsebenen von Teilnetzen.

Seit kurzer Zeit werden gerade in Personenkraftwagen aufgrund eines erhöhten Energiebedarfs unterschiedliche Spannungsbordnetze vorgesehen, nämlich insbesondere außer einem 14 Volt-Netz ein 42 Volt-Bordnetz. An dem 42 Volt-Bordnetz werden Verbraucher angeschlossen, die eine höhere Leistungsaufnahme haben, wie beispielsweise Elektromotoren zur Lenkunterstützung, die Spitzenleistungen von bis zu einem Kilowatt bei starken Lenkbewegungen benötigen. Eine der zentralen Aufgaben ist es daher, die 14 Volt-Komponenten gegenüber der Spannung von 42 Volt zu schützen, die in einem Fehlerfalle, beispielsweise bei durchgescheuerten Leitungen, Manipulationen oder falsch gesteckten Steckverbindungen auf Seiten des 14 Volt-Bordnetzes auftreten kann. Dasselbe Problem kann stets dann auftreten, wenn mehrere Spannungsebenen nebeneinander vorgesehen sind.

Bislang werden die 42 Volt führenden Leitungen gemeinsam mit den 14 Volt führenden Leitungen verlegt und insbesondere eine gemeinsame Masse verwendet. Bei einem Kurzschluss des Pluspols der 42 Volt-Spannung auf den Pluspol der 14 Volt-Spannung oder auf Masse kann es zu einer Funktionsbeeinträchtigung oder gar zur Zerstörung von Steuergeräten kommen, die für lediglich 14 Volt-Spannung ausgelegt sind.

Im Stand der Technik wird vorgeschlagen, eine galvanische Trennung beider Spannungsebenen, nämlich der 12 Volt-Spannungsebene und der 42 Volt-Spannungsebene vorzusehen. Durch die galvanische Trennung führt ein einpoliger Kurzschluss zwischen der 12 Volt- und der 42 Volt-Seite nicht zur Gefährdung der Komponenten auf der 14 Volt-Seite.

Eine Vorrichtung zum Erkennen eines Fehlerfalles bei Einspannungs-Bordnetzen ist aus der DE 196 43 005 A1 bekannt. Hierbei wird vorgeschlagen, die Karosserie des Fahrzeugs potentialfrei zu halten, wobei das Minus-Potential des Bordnetzes zur Batterie zurückgeführt wird. Außerdem ist ein Karossen-Kurzschluss-Signal zum Hinweis auf den Kurzschluss gegeben, das jedoch keinen elektrischen Funktionskurzschluss anzeigt. Die Fahrzeugkarosserie führt somit kein Minus-Potential. Sofern im Fehlerfalle die Karosserie ein Plus- oder Minus-Potential führt, wird das Karosserie-Kurzschluss-Signal gegeben. Der in dieser Druckschrift beschriebene Aufbau einer Vorrichtung zum Erkennen eines Fehlerfalles bei einem Einspannungsbordnetz kann nicht auf ein Zwei- oder Mehrspannungsbordnetz übertragen werden, da eine wie auch immer geartete Trennung zwischen zwei Spannungsebenen in dieser Druckschrift nicht beschrieben ist. Bei der weiteren Lösung des Standes der Technik, eine galvanische Trennung zwischen den Spannungsebenen vorzusehen, kann weiterhin ein Kurzschluss auftreten, der jedoch von der Vorrichtung nicht erkannt wird.

Aus der DE 199 61 435 A1 sind ein Verfahren und eine Vorrichtung zum Überspannungsschutz in Zweispannungsbordnetzen bekannt, die unterschiedliche Spannungsniveaus aufweisen. In mindestens einem Zweig des Bordnetzes auf dem höheren Spannungsniveau ist ein Schaltelement und im Bordnetz auf dem niedrigeren Spannungsniveau ist eine Spannungsmesseinheit angeordnet. Das Schaltelement ist durch die Spannungsmesseinheit schaltbar. Die beiden Bordnetze können über einen DC/DC-Wandler galvanisch miteinander verbunden sein. Hierbei wird die Spannungsmesseinheit in den DC/DC-Wandler integriert. Ein Schutz gegen einen Durchgriff zwischen beiden Teilnetzen ist nicht vorgesehen. Ein Kurzschluss wird von dieser Vorrichtung nicht erkannt.

Die am 06.12.2001 mit Priorität vom 08.12.2000 angemeldete und am 13.06.2002 veröffentlichte ältere Anmeldung WO 02/47234 A1 offenbart eine Vorrichtung zur Fehlererkennung, insbesondere Kurzschlusserkennung, in einem Mehrspannungsbordnetz. Hierbei ist eine Erfassungseinrichtung zum Erfassen eines Versorgungspotentials vorgesehen, mit dem ein Leistungsverteiler zur Energieversorgung elektrischer Lasten beaufschlagt ist und der über einen Ausgang eine elektrische Last mit Energie versorgt. Eine weitere Erfassungseinrichtung detektiert das Ausgangspotential am Ausgang. Fehlererkennungsmittel generieren ein Fehlersignal, sobald das Ausgangspotential von dem Versorgungspotential um einen bestimmten Wert abweicht. Durch den Vergleich von Versorgungs- und Ausgangsspannung soll ein hochohmiger Kurzschluss zwischen einer ersten Spannungsebene und einer zweiten erkannt werden.

Die am 10.02.2001 mit der Priorität des 24.02.2000 angemeldete und am 29.08.2001 veröffentlichte ältere Anmeldung EP 1 128 515 A2 offenbart einen Überspannungsschutz für einen 14V-Zweig eines 42V-/14V-Bordnetzes eines Kraftfahrzeugs mit einer Leistungselektronik zur Versorgung des 14V-Zweigs, deren Eingang mit dem 42V-Zweig verbunden ist. Im Kurzschlussfall wird eine mit dem 14V-Zweig verbundene Leitung gegen Masse geschaltet bzw. auf einen konstanten Spannungswert gelegt und eine Sicherung ausgelöst.

Der vorliegenden Erfindung liegt daher die Aufgabe zugrunde, eine Vorrichtung zum Erkennen eines Fehlerfalles bei Zwei- oder Mehrspannungsbordnetzen in einem Fahrzeug unter galvanischer Trennung der Spannungsebenen von Teilnetzen dahingehend fortzubilden, dass insbesondere ein Kurzschluss zwischen den Spannungsebenen erkannt werden kann, um die Zerstörung von Komponenten eines Teilnetzes durch Überspannung zu verhindern.

Diese Aufgabe wird durch eine Vorrichtung zum Erkennen eines Fehlerfalles bei Zwei- oder Mehrspannungsbordnetzen nach dem Oberbegriff des Anspruchs 1 dadurch gelöst, dass Mittel zur Auswahl der Anzahl der Uberwachungsmodule in Abhängigkeit von der Anzahl der Spannungsebenen vorgesehen sind Weiterbildungen der Erfindung sind in den abhängigen Ansprüchen definiert.

Dadurch wird eine Vorrichtung zum Erkennen eines Fehlerfalles bei Zwei- oder Mehrspannungsbordnetzen geschaffen, bei der eine leitende Verbindung zwischen Teilnetzen unterschiedlicher Spannungsebenen erkannt werden kann. Mehrere Bordnetze mit unterschiedlichen Spannungsebenen werden somit sicher voneinander isoliert, können also ungestört nebeneinander arbeiten, ohne dass die Gefahr einer Zerstörung von Komponenten zumindest eines Teilnetzes durch Überspannung zu befürchten ist. Somit ist auch der Aufbau von Multispannungsbordnetzen mit einer Funktionsüberwachung problemlos möglich.

Grundsätzlich sind Isolationsüberwachungen bei Einspannungsbordnetzen im Rahmen des Berührungsschutzes bei hohen Spannungen beispielsweise aus der DE 195 03 749 C1 bekannt. Es soll dabei jedoch ausschließlich ein Berührungsschutz in einem Einspannungsbordnetz geschaffen werden. Die Problematik eines Zwei- oder Mehrspannungsbordnetzes hinsichtlich des Durchgriffs der Teilnetze untereinander beispielsweise bei Auftreten technischer Defekte wird nicht diskutiert. Diese Problematik bildet jedoch den Kern der vorliegenden Erfindung.

Erfindungsgemäß ist die Anzahl der Überwachungsmodule in Abhängigkeit von der Anzahl der Spannungsebenen wählbar. Besonders bevorzugt sind bei n Spannungsebenen 2n(n-1) Überwachungsmodule vorgesehen. Dadurch können alle Teilnetze untereinander isolatiönsüberwacht werden, also beispielsweise Plus- und Minus-Pol eines ersten Teilnetzes gegenüber Plus- und Minuspol eines zweiten Teilnetzes. Somit kann jeglicher Kurzschluss der einzelnen Pole der verschiedenen Teilnetze überwacht und eine Funktionsbeeinträchtigung oder gar Zerstörung von Steuergeräten oder Verbrauchern, die für zumindest ein Teilnetz mit niedriger Spannungsebene ausgelegt sind, erfolgreich verhindert werden.

Bevorzugt bildet die Karosserie des Fahrzeugs den Rückleiter für eines der Teilnetze. Alternativ kann die Karosserie des Fahrzeugs im wesentlichen potentialfrei gehalten sein. Bevorzugt kann das Teilnetz mit einer niedrigen oder der niedrigsten Spannungsebene weiterhin die Karosserie des Fahrzeugs als Rückleiter benutzen, wobei eine Isolationsüberwachung gegenüber der Karosserie wahlweise vorgesehen sein kann. Das Teilnetz mit der höchsten oder einer höheren Spannungsebene sollte isoliert ausgeführt sein, also sowohl Plus- als auch Minus-Pol dieses Teilnetzes sollten keinerlei Verbindung zu dem Teilnetz der niedrigeren oder der niedrigsten Spannungsebene aufweisen. Ebenfalls sollte keine gemeinsame Masse für die Teilnetze vorgesehen sein, also somit eine galvanische Trennung der Teilnetze.

Vorzugsweise ist eine hochohmige Isolationsüberwachung vorgesehen. Hierdurch wird also eine echte Isolationsüberwachung erzeugt, bei der nicht, wie im Stand der Technik, z.B. eine Leuchtdiode in Reihe zu einem Widerstand geschaltet ist, was zu einer zu niederohmigen Konstellation führt und bei der letztendlich ein Spannungspotential auf der Karosserie eines Fahrzeugs liegen kann. Auch bezüglich der Entladung der Batterie bei stehendem Motor, also hinsichtlich der Ruheströme, erweist sich eine Niederohmigkeit als weniger vorteilhaft. Vorzugsweise ist also erfindungsgemäß zur Isolationsüberwachung ein hoher Innenwiderstand zwischen den Teilnetzen, insbesondere eine geeignete Wahl eines Wandlerkonzepts mit Potentialtrennung zur Widerstandsmessung zwischen den zu detektierenden Spannungsebenen vorgesehen. Beispielsweise wird hier die Höhe eines fließenden Prüfstromes gemessen, die dann das Maß für den Isolationswiderstand ist. Vorzugsweise überwacht die Widerstandmessung das Unterschreiten eines vorgebbaren Isolationswiderstandes und schaltet bei Unterschreiten des vorgebbaren Isolationswiderstandes eines oder mehrere der Teilnetze und/oder das zumindest eine betroffene, beispielsweise defekte, Steuergerät ab. Durch Wahl eines hohen Innenwiderstandes bzw. hochohmigen Isolationswiderstandes und eines entsprechend hohen Schwellwertes des Isolationswiderstandes ist die Wahrscheinlichkeit, dass ein Fehlerfall nicht auffällt, vernachlässigbar gering, da in jeglichem Fehlerfall ein geringerer Widerstand auftritt. Dieser wird gegenüber dem hochohmigen deutlich erkennbar. Bei Vorsehen eines zu niedrigen Isolationswiderstandes, wie im Stand der Technik vorgesehen, kann dies jedoch nicht garantiert werden.

Bevorzugt sind die Überwachungsmodule zur Isolationsüberwachung in zumindest einem Steuergerät integriert. Die Überwachungsmodule oder die Überwachungseinheit sind vorzugsweise in einem Spannungswandler vorgesehen. Dies kann insbesondere ein DC/DC-Wandler sein. Bei Wahl eines geeigneten Wandlerkonzepts kann hierdurch eine Potentialtrennung erfolgen. Bevorzugt steht das Steuergerät mit den zumindest zwei Spannungsebenen in Verbindung und es ist bevorzugt zumindest eine Einrichtung zum Trennen der Verbindung eines oder mehrerer Teilnetze vom Steuergerät und/oder eine Einrichtung zum Abschalten des Steuergeräts bei Detektion eines Fehlerfalles und/oder eine Einrichtung zum Abgeben eines Warnsignals bei detektiertem Fehlerfall vorgesehen. Besonders bevorzugt ist die Einrichtung zum Trennen ein Schalter, Relais, Halbleiterelement oder ein anderer Kontakt. Hierdurch wird gewährleistet, dass jeweils diejenigen Komponenten des oder der Teilnetze mit niedrigerer Spannungsebene nicht durch Überspannung beschädigt werden können. Sobald in der Isolationsüberwachungseinrichtung bzw. den Überwachungsmodulen ein Fehlerfall erkannt wird, wird die Trenneinrichtung dazu veranlasst, die Verbindung des Teilnetzes mit dem Steuergerät zu trennen. Vorzugsweise trennt die Einrichtung zum Trennen das defekte Teilnetz von den übrigen Komponenten des Zwei- oder Mehrspannungsbordnetzes.

Vorzugsweise ist ein Schnittstellenelement zum Eingeben eines Signals zum Abschalten eines oder mehrerer Teilnetze und/oder des oder der Steuergeräte und/oder zum Abgreifen von Diagnosedaten zum Diagnostizieren eines aufgetretenen Fehlerfalles vorgesehen. Bei Erkennen einer leitenden Verbindung zwischen zumindest zwei Teilnetzen unterschiedlicher Spannungsebene kann also nicht nur zumindest ein Teilnetz, insbesondere das defekte Teilnetz, von dem übrigen Mehrspannungsbordnetz abgetrennt oder zumindest ein Warnsignal gegeben und/oder das gesamte die Isolationsüberwachung vornehmende Steuergerät abgeschaltet werden, sondern durch ein solches Schnittstellenelement auch eine Diagnose des aufgetretenen Fehlers erfolgen. Eine solche Schnittstelle kann eine Busschnittstelle, wie beispielsweise ein CAN-Bus, eine K-Leitung oder dergleichen sein. Über das Schnittstellenelement kann von extern ebenfalls ein Signal zum Abschalten eines oder mehrerer Teilnetze und/oder des oder der Steuergeräte gegeben werden. Beispielsweise ist eine weitere Datenverarbeitungseinrichtung vorgesehen, die nicht nur zum Erstellen einer Diagnose des Fehlers, sondern auch zum Abschalten des oder der Teilnetze und/oder des oder der Steuergeräte dient.

Zur näheren Erläuterung der Erfindung werden im folgenden Ausführungsbeispiele anhand der Zeichnungen näher beschrieben. Diese zeigen in:
- Figur 1: eine Prinzipskizze einer ersten Ausführungsform einer erfindungsgemäßen Vorrichtung zum Erkennen eines Fehlerfalles bei einem Zweispannungsbordnetz, und
- Figur 2: eine Prinzipskizze einer zweiten Ausführungsform einer erfindungsgemäßen Vorrichtung zum Erkennen eines Fehlerfalles bei einem Dreispannungsbordnetz.

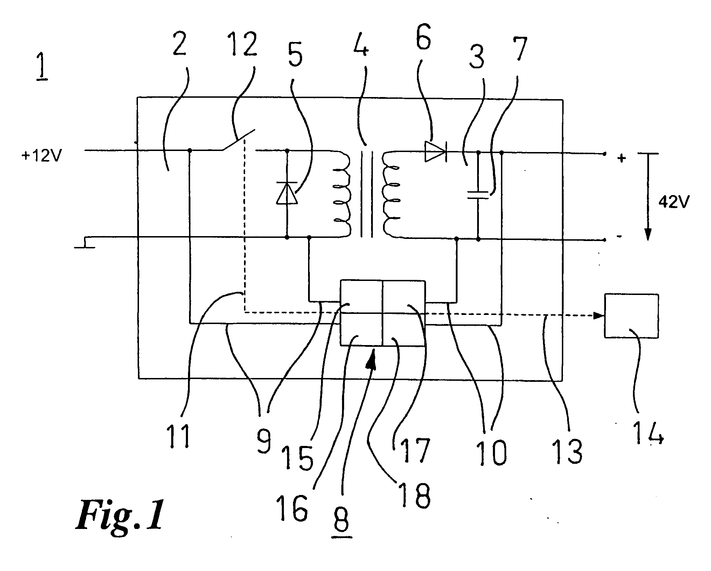

Figur 1 zeigt eine Prinzipskizze einer ersten Ausführungsform einer erfindungsgemäßen Vorrichtung 1 zum Erkennen eines Fehlerfalles bei einem Zweispannungsbordnetz mit einem ersten Teilnetz 2, das ein 12 Volt-Netz ist, wobei der eine Pol auf Masse, beispielsweise einer Fahrzeugkarosserie, liegt, und einem zweiten Teilnetz 3, das ein 42 Volt-Netz mit von der Masse des 12 Volt-Netzes getrenntem Plus- und Minuspol ist. Das erste und das zweite Teilnetz sind galvanisch getrennt durch einen Transformator 4. In dem ersten Teilnetz 2 ist eine Freilaufdiode 5 und in dem zweiten Teilnetz 3 sind Gleichrichtungs- und Glättungselemente in Form einer Diode 6 und eines Kondensators 7 vorgesehen.

Mit beiden Teilnetzen 2, 3 ist außerdem eine Überwachungseinheit 8 verbunden, nämlich über die Leitungen 9, 10. Die Überwachungseinheit ist in einem Steuergerät, insbesondere einem DC/DC-Wandler vorgesehen. Außerdem führt von der Überwachungseinheit eine Steuerleitung 11 zu einem Schalter 12 in dem Plus-Pfad des ersten 12 Volt-Teilnetzes. Von der Überwachungseinheit ist außerdem eine Signalleitung 13 zu einem Schnittstellenelement 14 gelegt, das eine Diagnose eines aufgetretenen Fehlers vornehmen oder an ein weiteres Gerät zur Fehlerdiagnose weiterleiten kann. Die Überwachungseinheit 8 kann aus mehreren Überwachungsmodulen 15 bis 18 zur Überwachung der einzelnen Spannungsebenen bestehen.

Durch Wahl eines Wandlerprinzips mit galvanischer Trennung kann ein hochohmiger Isolationswiderstand zwischen den Teilnetzen zur galvanischen Trennung und zugleich zur zuverlässigen Isolationsüberwachung im fehlerfreien Fall gewährleistet werden. In dem gewählten dargestellten Sollzustand sind weder Plus- noch Minus-Pol der beiden Teilnetze 2, 3 miteinander verbunden. Die Überwachungseinheit steht mit beiden Spannungsebenen der beiden Teilnetze 2, 3 in Verbindung und detektiert ggf. einen Kurzschluss zwischen den Leitern der Teilnetze. Bei Feststellen eines Kurzschlusses kann zum einen der Schalter 12 geöffnet, wodurch das Teilnetz 2 abgetrennt wird, und/oder das Steuergerät außer Betrieb gesetzt werden. Die Abfrage innerhalb der Überwachungsmodule kann dabei dahingehend geschaltet sein, dass bei Unterschreiten eines vorgegebenen Isolationswiderstandes zwischen dem ersten und zweiten Teilnetz über die Steuerleitung 11 ein Abschaltsignal an den Schalter 12 gegeben wird, wodurch dieser öffnet.

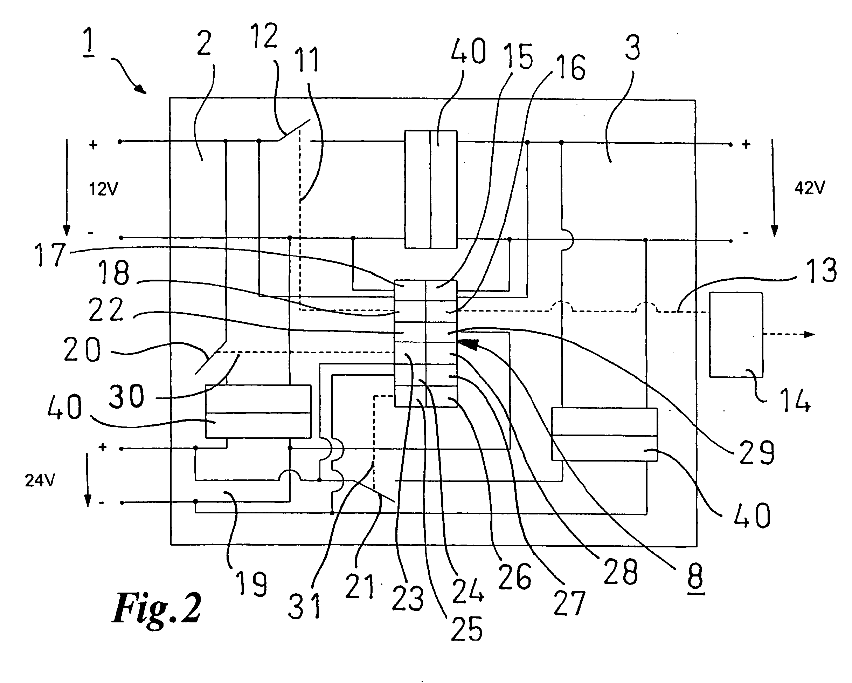

In Figur 2 ist eine erfindungsgemäße Vorrichtung 1 zum Erkennen eines Fehlerfalles bei einem Dreispannungsbordnetz dargestellt. Im Unterschied zu der Ausführungsform gemäß Figur 1 ist eine dritte Spannungsebene in einem Teilnetz 19 vorgesehen. Das dritte Teilnetz ist beispielsweise ein 24 Volt-Netz oder ein beliebiges anderes Netz, das eine andere Spannungsebene belegt als die anderen Teilnetze 2, 3. Es ist daher eine Isolationsüberwachung für das dritte Teilnetz 19 gegenüber dem ersten Teilnetz 2 und dem zweiten Teilnetz 3 vorgesehen. Zu diesem Zweck sind weitere Schalter 20, 21 jeweils in dem Pluspfad der Verbindung zwischen dem ersten Teilnetz 2 und dem dritten Teilnetz 19 sowie dem dritten Teilnetz 19 und dem zweiten Teilnetz 3 angeordnet. Für die nun abzudeckenden 12 Überwachungsfälle, Plus-Potential des 42V-Netzes gegen Plus-Potential des 24V-Netzes, Plus-Potential des 12V-Netzes, Minus-Potential des 24V-Netzes, Minus-Potential des 12V, Minus-Potential des 42V-Netzes gegen Plus-Potential des 24V-Netzes, Plus-Potential des 12V-Netzes, Minus-Potential des 24V-Netzes, Minus-Potential des 12V-Netzes und Plus-Potential des 24V-Netzes gegen Plus-Potential des 12V-Netzes, Minus-Potential des 12V-Netzes und Minus-Potential des 24V-Netzes gegen Plus-Potential des 12V-Netzes und Minus-Potential des 12V-Netzes ist die eine Überwachungseinheit 8 vorgesehen. Die weiteren Überwachungsmodule 22 bis 29 sind ebenfalls in Figur 2 in der Überwachungseinheit 8 angedeutet.

Der jeweilige hochohmige Innenwiderstand der Schaltung zum Erzeugen einer galvanischen Trennung zwischen den Teilnetzen 2 und 3 sowie den Teilnetzen 2 und 19 und 19 und 3 ist in Figur 2 lediglich angedeutet und durch das Bezugszeichen 40 gekennzeichnet. Es sollte bei der Wahl eines geeigneten hochohmigen Isolationswiderstandes darauf geachtet werden, dass eine Widerstandsmessung zwischen den zu detektierenden Spannungsebenen ermöglicht wird. Eine Widerstandsmessung kann dabei beispielsweise über die Höhe eines fließenden Prüfstromes erfolgen.

Aufgrund der unterschiedlichen Signalleitungen und Steuerleitungen 11, 30, 31 kann ein differenziertes Abschalten von Teilnetzen bzw. des jeweiligen betroffenen Teilnetzes erfolgen. Alternativ oder zusätzlich kann auch das Steuergerät selbst abgeschaltet und/oder ein Warnsignal abgegeben werden. Bei Vorsehen einer Überwachungseinheit ist das Vorsehen lediglich einer Diagnose- oder Signalleitung 13 ausreichend.

Neben den vorstehend beschriebenen und in den Zeichnungen dargestellten Ausführungsformen können im Rahmen der vorliegenden Erfindung noch weitere gebildet werden, bei denen jeweils Überwachungsmodule und/oder eine Überwachungseinheit zur Isolationsüberwachung von Teilnetzen unterschiedlicher Spannungsebenen untereinander vorgesehen sind, wobei sich insbesondere die Anzahl der Überwachungsmodule nach der Anzahl der Spannungsebenen richtet. Zwischen den einzelnen Spannungsebenen ist außerdem eine galvanische Trennung vorgesehen, so dass eine Verbindung zwischen den Teilnetzen lediglich durch die Überwachungsmodule bzw. die Überwachungseinheit gegeben ist, die hochohmig ausgeführt sind. Die Anzahl der einzelnen Teilnetze ist dabei im wesentlichen unbegrenzt, so dass Multispannungsnetze mit beliebiger Anzahl von Spannungsebenen bzw. Bordnetzstrukturen mit beliebig vielen Teilnetzen problemlos betrieben werden können.

### BEZUGSZEICHENLISTE

- 1: Vorrichtung
- 2: erstes Teilnetz
- 3: zweites Teilnetz
- 4: Transformator
- 5: Freilaufdiode
- 6: Diode
- 7: Kondensator
- 8: Überwachungseinheit
- 9: Leitung
- 10: Leitung
- 11: Steuerleitung
- 12: Schalter
- 13: Signalleitung
- 14: Schnittstellenelement
- 15: Überwachungsmodul
- 16: Überwachungsmodul
- 17: Überwachungsmodul
- 18: Überwachungsmodul
- 19: drittes Teilnetz
- 20: Schalter
- 21: Schalter
- 22: Überwachungsmodul
- 23: Überwachungsmodul
- 24: Überwachungsmodul
- 25: Überwachungsmodul
- 26: Überwachungsmodul
- 27: Überwachungsmodul
- 28: Überwachungsmodul
- 29: Überwachungsmodul
- 30: Signalleitung
- 31: Signalleitung
- 40: Innenwiderstand

## Patentansprüche

1. Vorrichtung (1) zum Erkennen eines Fehlerfalles bei Zwei- oder Mehrspannungsbordnetzen in einem Fahrzeug unter galvanischer Trennung der Spannungsebenen von Teilnetzen (2, 3, 19), wobei Überwachungsmodule (15, 16, 17, 18, 22, 23, 24, 25, 26, 27, 28, 29) einer Überwachungseinheit (8) zur Isolationsüberwachung der Teilnetze (2, 3, 19) untereinander vorgesehen sind,
und
sich die Anzahl der Überwachungsmodule (15, 16, 17, 18, 22, 23, 24, 25, 26, 27, 28, 29) nach der Anzahl der Spannungsebenen richtet.

2. Vorrichtung (1) nach Anspruch 1,
**dadurch gekennzeichnet, dass**
bei n Spannungsebenen 2n(n-1) Überwachungsmödule (15, 16, 17, 18, 22, 23, 24, 25, 26, 27, 28, 29) vorgesehen sind.

3. Vorrichtung (1) nach einem der vorstehenden Ansprüche,
**dadurch gekennzeichnet, dass**
die Karosserie des Fahrzeugs den Rückleiter für eines der Teilnetze (2) bildet.

4. Vorrichtung (1) nach einem der Ansprüche 1 oder 2,
**dadurch gekennzeichnet, dass**
die Karosserie des Fahrzeugs im wesentlichen potentialfrei gehalten ist.

5. Vorrichtung (1) nach einem der vorstehenden Ansprüche,
**dadurch gekennzeichnet, dass**
die Überwachungsmodule (15, 16, 17, 18, 22, 23, 24, 25, 26, 27, 28, 29) zur Isolationsüberwachung in zumindest einem Steuergerät integriert sind.

6. Vorrichtung (1) nach einem der vorstehenden Ansprüche,
**dadurch gekennzeichnet, dass**
die Überwachungsmodule der Überwachungseinheit in einem Spannungswandler, insbesondere einem DC/DC-Wandler vorgesehen sind.

7. Vorrichtung (1) nach einem der Ansprüche 5 oder 6,
**dadurch gekennzeichnet, dass**
das Steuergerät mit zumindest zwei Spannungsebenen in Verbindung steht und zumindest eine Einrichtung (12, 20, 21) zum Trennen der Verbindung eines oder mehrerer Teilnetze (2, 3, 19) vom Steuergerät und/oder eine Einrichtung zum Abschalten des Steuergeräts bei Detektion eines Fehlerfalles und/oder eine Einrichtung zum Abgeben eines Warnsignals bei detektiertem Fehlerfall vorgesehen ist.

8. Vorrichtung (1) nach Anspruch 7,
**dadurch gekennzeichnet, dass**
die Einrichtung (12, 20, 21) zum Trennen ein Schalter, Relais, Halbleiterelement oder ein anderer Kontakt ist.

9. Vorrichtung (1) nach Anspruch 7 oder 8,
**dadurch gekennzeichnet, dass**
die Einrichtung (12, 20, 21) zum Trennen das defekte Teilnetz von den übrigen Komponenten des Zwei- oder Mehrspannungsbordnetzes trennt.

10. Vorrichtung (1) nach einem der vorstehenden Ansprüche,
**dadurch gekennzeichnet, dass**
ein Schnittstellenelement (14) zum Eingeben eines Signals zum Abschalten eines oder mehrerer Teilnetze (2, 3, 19) und/oder des oder der Steuergeräte und/oder zum Abgreifen von Diagnosedaten zum Diagnostizieren eines aufgetretenen Fehlerfalles vorgesehen ist.

11. Vorrichtung (1) nach einem der vorstehenden Ansprüche,
**dadurch gekennzeichnet, dass**
eine hochohmige Isolationsüberwachung vorgesehen ist.

12. Vorrichtung (1) nach Anspruch 11,
**dadurch gekennzeichnet, dass**
zur Isolationsüberwachung ein hoher Innenwiderstand zwischen den Teilnetzen (2, 3, 19), insbesondere geeignete Wahl eines Wandlerkonzepts mit Potentialtrennung (4), zur Widerstandsmessung zwischen den zu detektierenden Spannungsebenen vorgesehen ist.

13. Vorrichtung (1) nach Anspruch 11 oder 12,
**dadurch gekennzeichnet, dass**
die Widerstandsmessung das Unterschreiten eines vorgebbaren Isolationswiderstandswertes überwacht und bei Unterschreiten des vorgegebenen Isolationswiderstandswertes eines oder mehrere Teilnetze (2, 3, 19) und/oder das zumindest eine Steuergerät abschaltet.

## Claims

1. Device (1) for detecting faults in dual-voltage or multi-voltage electrical systems in a vehicle with galvanic isolation of the voltage levels of subsystems (2, 3, 19), in which monitoring modules (15, 16, 17, 18, 22, 23, 24, 25, 26, 27, 28, 29) of a monitoring unit (8) are provided to monitor the mutual isolation of the subsystems (2, 3, 19) and the number of monitoring modules (15, 16, 17, 18, 22, 23, 24, 25, 26, 27, 28, 29) depends on the number of voltage levels.

2. Device (1) according to claim 1, **characterised in that** 2n(n-1) monitoring modules (15, 16, 17, 18, 22, 23, 24, 25, 26, 27, 28, 29) are provided for n voltage levels.

3. Device (1) according to one of the preceding claims, **characterised in that** the body of the vehicle forms the return conductor for one of the subsystems (2).

4. Device (1) according to either of claims 1 or 2, **characterised in that** the body of the vehicle is kept essentially potential-free.

5. Device (1) according to one of the preceding claims, **characterised in that** the monitoring modules (15, 16, 17, 18, 22, 23, 24, 25, 26, 27, 28, 29) for monitoring the isolation are integrated into at least one controller.

6. Device (1) according to one of the preceding claims, **characterised in that** the monitoring modules of the monitoring unit are provided in a voltage transformer, in particular a DC/DC transformer.

7. Device (1) according to either of claims 5 or 6, **characterised in that** the controller is connected to at least two voltage levels and **in that** at least one device (12, 20, 21) is provided to isolate the connection of one or more subsystems (2, 3, 19) from the controller and/or a device is provided to switch off the controller when a fault is detected and/or a device is provided to output a warning signal when a fault is detected.

8. Device (1) according to claim 7, **characterised in that** the isolating device (12, 20, 21) is a switch, relay, semiconductor element or other contact.

9. Device (1) according to claim 7 or claim 8, **characterised in that** the isolating device (12, 20, 21) isolates the defective subsystem from the other components of the dual-voltage or multi-voltage electrical system.

10. Device (1) according to one of the preceding claims, **characterised in that** an interface element (14) is provided to input a signal for switching off one or more subsystems (2, 3, 19) and/or the controller or controllers and/or to read off diagnostic data for diagnosing a fault.

11. Device (1) according to one of the preceding claims, **characterised by** high-resistance monitoring of the isolation.

12. Device (1) according to claim 11, **characterised in that**, in order to monitor the isolation, high internal resistance is provided between the subsystems (2, 3, 19), in particular by selecting a suitable transformer design with potential isolation (4), to measure the resistance between the voltage levels to be detected.

13. Device (1) according to claim 11 or claim 12, **characterised in that** the resistance measurement monitors when the isolation resistance value falls below a predetermined value and switches off one or more subsystems (2, 3, 19) and/or the at least one controller when the isolation resistance value falls below the predetermined value.

## Revendications

1. Dispositif (1) pour détecter dans un véhicule une condition d'erreur dans des réseaux de bord présentant deux ou plusieurs tensions par séparation, de manière galvanique les plans de tension de réseaux partiels (2, 3, 19), pour lesquels des modules de surveillance (15, 16, 17, 18, 22, 23, 24, 25, 26, 27, 28, 29) d'une unité de surveillance (8) sont prévus pour la surveillance de l'isolement des réseaux partiels (2, 3, 19) entre eux,
et pour lequel
le nombre de modules de surveillance (15, 16, 17, 18, 22, 23, 24, 25, 26, 27, 28, 29) sont en dépendance du nombre de plans de tension.

2. Dispositif (1) selon la revendication 1,
**caractérisé en ce que** pour n plans de tension, 2n(n-1) modules de surveillance (15, 16, 17, 18, 22, 23, 24, 25, 26, 27, 28, 29) sont prévus.

3. Dispositif (1) selon l'une des revendications 1 ou 2,
**caractérisé en ce que** la carrosserie du véhicule forme le conducteur de retour pour l'un des réseaux partiels (2).

4. Dispositif (1) selon l'une des revendications 1 ou 2,
**caractérisé en ce que** la carrosserie du véhicule est maintenue essentiellement exempte de potentiel.

5. Dispositif (1) selon l'une des revendications 1 à 4,
**caractérisé en ce que** les modules de surveillance (15, 16, 17, 18, 22, 23, 24, 25, 26, 27, 28, 29) pour la surveillance de l'isolement sont intégrés dans au moins un appareil de commande.

6. Dispositif (1) selon l'une des revendications 1 à 5,
**caractérisé en ce que** les modules de surveillance de l'unité de surveillance sont prévus dans un convertisseur de tension, en particulier un convertisseur à courant continu.

7. Dispositif (1) selon l'une des revendications 5 ou 6,
**caractérisé en ce que** l'appareil de commande se trouve en liaison avec au moins deux plans de tension et au moins un dispositif (12, 20, 21) pour la séparation de la liaison d'un ou de plusieurs réseaux partiels (2, 3, 19) de l' appareil de commande et/ou un dispositif pour l'arrêt de l'appareil de commande en cas de détection d'une condition d'erreur et/ou un dispositif pour l'émission d' un signal d' alerte en cas de condition d'erreur détectée est prévu.

8. Dispositif (1) selon la revendication 7,
**caractérisé en ce que** le dispositif (12, 20, 21) pour la séparation est un commutateur, un relais, un élément semi-conducteur ou un autre contact.

9. Dispositif (1) selon la revendication 7 ou 8,
**caractérisé en ce que** le dispositif (12, 20, 21) pour la séparation sépare le réseau partiel défectueux des autres composants du réseau de bord à deux ou plusieurs tensions.

10. Dispositif (1) selon l'une des revendications 1 à 9,
**caractérisé en ce qu'**un élément d'interface (14) pour l'entrée d'un signal pour l'arrêt d'un ou de plusieurs réseaux partiels (2, 3, 19) et/ou du ou des appareils de commande et/ou pour le prélèvement de données de diagnostic pour le diagnostic d'une condition d'erreur apparue est prévu.

11. Dispositif (1) selon l'une des revendications 1 à 10,
**caractérisé en ce qu'**une surveillance de l'isolement à haute impédance est prévue.

12. Dispositif (1) selon la revendication 11,
**caractérisé en ce que** pour la surveillance de l'isolement, une résistance interne élevée entre les réseaux partiels (2, 3, 19), en particulier un choix approprié d'un concept de convertisseur avec séparation de potentiel (4), pour la détermination de la résistance entre les plans de tension à détecter est prévue.

13. Dispositif (1) selon la revendication 11 ou 12,
**caractérisé en ce que** la détermination de la résistance surveille le passage sous une valeur de résistance d'isolement prescriptible et en cas de passage sous la valeur de résistance d'isolement prescrite arrête un ou plusieurs réseaux partiels (2, 3, 19) et/ou l'au moins un appareil de commande.
